# EUROPEAN PATENT APPLICATION

(11) **EP 0 541 861 A1**
(43) Date of publication of application: **19.05.1993**
(21) Application number: 91310400.6
(22) Date of filing: 11.11.1991
(51) Int. Cl.: F24F 3/16

(54) **Mounting frame for a filter disposed at the front of the ceiling in a clean room**

(71) Applicant: HIRAYAMA SETSUBI KABUSHIKI KAISHA, Yamato-shi Kanagawa-Ken (JP)
(72) Inventor: Hirayama, Shoji, Yamato-shi, Kanagawa-ken (JP)
(74) Representative: Crouch, David John

(57) **Abstract**

By making a mounting frame (2) for a filter (3) disposed at the front of the ceiling in a clean room of a sintered metallic material, the mounting frame (2) obtains a structure with a strength capable of supporting the filter and with an air filtering resistance comparable to that of the filter, thereby preventing standing air in the lower part of the mounting frame and solving the problem of lowered purity of air.

## Description

The present invention relates to a mounting frame for a filter disposed at the front of the ceiling in a clean room.

Conventionally various clean rooms with a sufficiently purified space have been used widely in producing precision instruments, electronic parts such as LSIs, medicines or others. Although various types of clean rooms are known to public, a laminar downflow type wherein purified air is fed vertically from an air port disposed at the front of the ceiling into the room is generally employed. In this case a super clean room is realized wherein purified air is fed through a filter disposed on the overall surface of the ceiling. Although the filter generally used in a super clean room has a good filtering capacity because of glass fiber bonded by means of a binder, the binder possesses not only a peculiar odor, but glass fiber corpuscles may flow into the room and scatter therein because of the deterioration of the binder associated with aging. The filter now in use has the above-mentioned disadvantages.

Since in a conventional clean room the filter is fixed in a mounting frame hung from the ceiling, and since the circumference of the filter is sealed with a sealing compound, purified air can not pass through the vicinity of the mounting frame, standing air is easily formed in the lover part of the mounting frame, and a vortex flow of floating dusts formed downstream of the mounting frame may lower the purify of air.

It is an object of the present invention to provide a filter mounting frame which itself works as a filter and forms no standing air downstream thereof.

In order to attain said object, a filter mounting frame for a clean room is constructed of a hard material molding having a strength capable of supporting the filter and also having an air filtering resistance comparable to that of the filter according to the present invention.

For the mounting frame materials having an air filtering resistance comparable to that of a high performance filter is used, such as alumina or stainless sintered material, porous glass, and FRP. By applying an air permeable sealing material to the stepped part of the mounting frame in contact with the high performance filter, the overall front of the ceiling becomes a filter.
Fig. 1 is a sectional view of a clean room filter part using a filter mounting frame according to the present invention,
Fig. 2 is an upward looking view of the ceiling.

In the following the present invention is described in detail referring to the drawings.

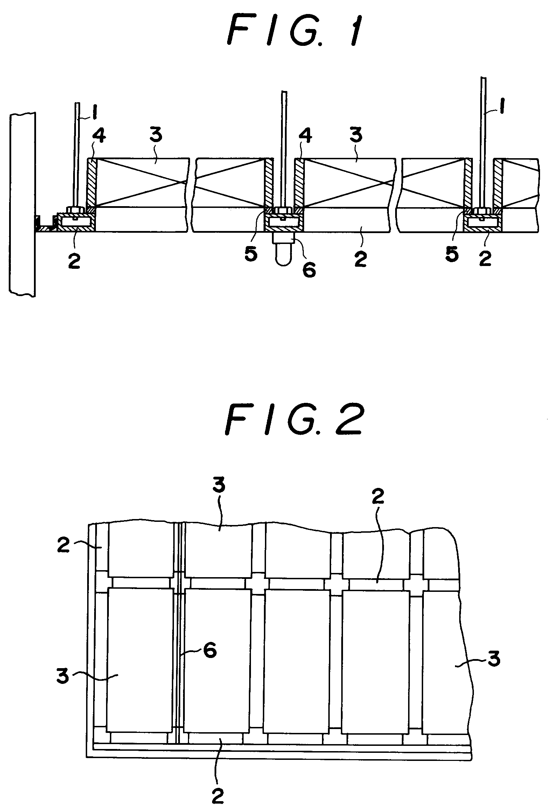

Fig. 1 shows one embodiment of the present invention, wherein hanging bolts 1 support mounting frames 2, and high performance filters 3, 3 are provided between the mounting frames 2, 2. As a mounting frame 2 a square column-shaped hollow body made of air permeable alumina sintered material is used, but the cross-sectional shape thereof is not limited to that shown in the figure. Between the lower end face of the frame member 4 of the filter 3 and the upper face of the mounting frame an air permeable seal 5 is applied.

Fig. 2 is an upward looking view of the ceiling, and the overall ceiling including the filter 3, the mounting frame 2 and the seal material 5 is air permeable. No. 6 in the figure shows a fluorescent light provided at the mounting frame 2.

As described above, the air supplied from above passes through the overall front of the ceiling including the mounting frame, and only purified air will be blown into the clean room. As a result thereof, no standing air is formed in the lower part of the mounting frame, thereby using the overall front of the ceiling as a filter and maintaining a high purity of air.

In said embodiment, if a high performance filter preferably made of metal powder sinter is supported by a mounting frame made of air permeable sintered material, both the filter and the mounting frame will show the same expansion coefficient, resulting in a more reliable sealing than any seal, an increased air filtering area, a reduced air resistance, and a saved energy.

According to the present invention, as described above, since the filter mounting frame has a strength capable of supporting the filter, and since it is made of a hard material with an air filtering resistance comparable to that of the filter, not only the air filtering area can be increased substantially and the problem of the lowered air purity because of standing air in the lower part of the mounting frame can be solved, but also the overall ceiling can be used as a filter. By making the mounting frame of a hard material such as sintered metallic members dust and dirt can be removed by means of washing or so, thereby permitting a clean reuse thereof.

## Claims

1. A filter mounting frame in a clean room, said mounting frame in a clean room having a strength capable of supporting said filter and being made of a hard material with an air filtering resistance comparable to that of said filter.

2. A filter mounting frame in a clean room as claimed in Claim 1, said frame being made of an alumina or stainless sintered material.
